# EUROPEAN PATENT SPECIFICATION

(11) **EP 1 295 744 B1**
(45) Date of publication and mention of the grant of the patent: **28.06.2006**
(21) Application number: 01203680.2
(22) Date of filing: 25.09.2001
(51) Int. Cl.: B60J 7/047

(54) **Open roof construction for a vehicle**
Öffnungsfähige Fahrzeugdachkonstruktion
Construction de toit ouvrant pour véhicule

(43) Date of publication of application: 26.03.2003
(73) Proprietor: Inalfa Roof Systems Group B.V., 5804 AH Venray (NL)
(72) Inventor: Manders, Peter Christiaan Leonardus Johannes, 5961 SM Horst (NL)
(74) Representative: Metman, Karel Johannes

(56) References cited:
- DE-A- 3 802 380
- FR-A- 2 753 933

## Description

The present invention relates to an open roof construction in accordance with the preamble of claim 1.

Such an open roof construction is known, for example from WO-A-00/29235.

The object of the present invention is to provide a new open roof construction of the kind referred to in the introduction.

In order to accomplish that objective, the open roof construction according to the invention is characterized by the features defined in the characterizing portion of claim 1.

The possibility to open the second, rear roof element while the first, front roof element occupies a rearward position appears to provide an effective remedy against the so-called "booming" effect which may occur when the first roof element is opened. The opening of the rear element influences the Helmholtz resonance frequency of the vehicle interior. Amongst other things said resonance may cause the booming effect. Said effect can be eliminated by opening the rear roof element to a greater or smaller extent. An additional or other advantage of the possibility to open the rear roof element is the fact that any rear passengers of the vehicle will thus have their own ventilating possibility.

It is noted that it is known per se to open the rear panel of an open roof construction comprising two panels arranged one behind another while the front panel occupies a rearward position (see DE-A-38 01 881, for example). The roof element that is disclosed therein, however, is not a front "topslider" element which is guided in a guide which is fixed to the rear roof element.

EP-A-1 236 601 is an Art 54(3) EPC publication showing and describing an open roof construction having front and rear roof elements and front and rear longitudinal guides. The rear longitudinal guide is mounted on the rear roof element, which is fitted with a rear operating mechanism for moving the rear roof element to at least a ventilating position. The rear operating mechanism can be operated while the guiding device of the front roof element is positioned in said rear longitudinal guide.

The opening of the rear roof element can take place manually or automatically. The latter is especially advantageous with a view to counteracting the booming effect. It is thereby possible, for example, to use a sensor for measuring vibrations or sound (microphone) as an input signal used for controlling the rear roof element. Furthermore it is possible to couple the two operating mechanisms and to make the movement of the rear roof element (mechanically) dependent on the movement of the front roof element.

The invention will now be explained in more detail with reference to the drawing, which schematically shows an exemplary embodiment of the open roof construction according to the invention.

Figs. 1, 2 and 3 are schematic representations of the possibilities of movement of the embodiment of the open roof construction according to the invention, showing three different positions thereof.

Figs. 4, 5 and 6 are comparable views of the roof of Figs. 1 - 3 in the same positions thereof, wherein the operating mechanisms for the open roof construction are shown, however.

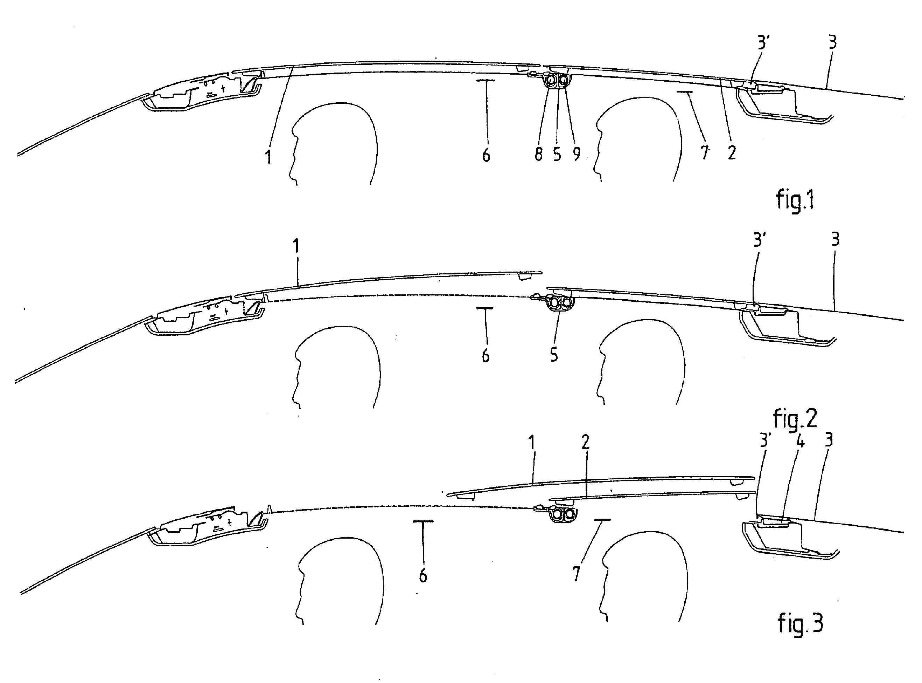

The drawing, and first Figs. 1 - 3, show an embodiment of the open roof construction according to the invention, which comprises two roof elements, the front roof element of which is of the type which is called a "topslider" in practice. With such a roof type, a roof element can be moved rearwards from its closed position in the roof opening to a position above the roof element that is disposed therebehind, wherein the roof element is supported by a supporting element, which is guided by a roof rail, for example.

The roof that is shown in Figs. 1 - 3 comprises two movable roof elements, viz. a front roof element 1 and a rear roof element 2. The two roof elements 1, 2 preferably comprise a rigid and at least partially transparent panel, which is made of glass or a plastic, for example. It is also possible, of course, for only one of the two roof elements 1, 2 to be transparent. The roof construction may also comprise further fixed or movable roof elements.

Fig. 1 shows the two roof elements 1, 2 in their closed position; in Fig. 2 the front element 1 is shown to have been moved upwards at its rear side, so that a ventilating position of the front roof element is created. In Fig. 3, the front roof element is shown in a rearwardly moved position, whereas the rear roof element 2 is shown in a ventilating position, in which it slopes upwards to the rear.

The open roof construction according to the invention is mounted in a fixed roof 3 of the vehicle, in particular a passenger car. Fixed roof 3 is formed with a roof opening for the open roof construction, which is mounted in the fixed roof 3 by means of a frame 4 which forms the stationary part of the open roof construction. The open roof construction may also be integrated in the fixed roof 3 of the vehicle

In the illustrated embodiment, frame 4 comprises a central beam 5 extending in transverse direction, which separates a front opening 6 and a rear opening 7. Front opening 6 can be closed by means of front roof element 1, whereas the rear roof element 2 is capable of closing and at least partially releasing rear opening 7. Central beam 5 is provided with a front roller curtain 8 and a rear roller curtain 9 in the illustrated embodiment, which function to prevent the incidence of sunlight through the opening 6, 7 in question.

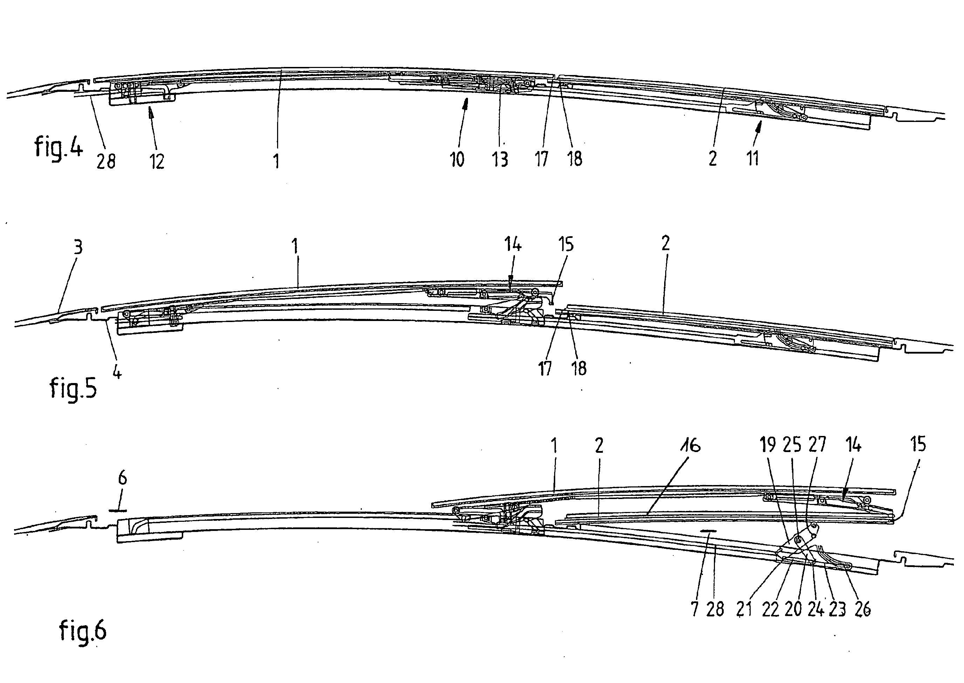

Figs. 4 - 6 show the operating mechanisms for the two roof elements 1, 2, viz. a front operating mechanism 10 for the front roof element 1 and a rear operating mechanism 11 for the rear roof element 2. Said operating mechanisms 10 and 11 are present on both longitudinal sides of passages 6 and 7. Only the parts present on one of the longitudinal sides will be discussed hereafter, whereby it should be considered that comparable parts will be present in mirror image thereof on the other longitudinal side.

In addition to a vertically adjustable front support 12, said front operating mechanism 10 comprises a supporting device mounted in the rear part of the front roof element 1, in this case in the form of a lifting device 13 for adjusting the rear side of roof element 1 for height. Besides said lifting device 13, the front operating mechanism 10 comprises a separate guiding device 14 in this embodiment, which is fixedly or adjustably (in this embodiment) connected to the front roof element 1 and which is fitted with a sliding shoe 15. In rearwardly moved positions of the front roof element 1, said sliding shoe can come into contact with a rear longitudinal guide 16, which is present on each longitudinal side of the rear roof element 2, under the side edge thereof in this embodiment. Rear longitudinal guide 16 is so configured that the sliding shoe 15 is retained at least in upward direction, whereas it is furthermore guided on one side, or on both sides.

Several embodiments of the front operating mechanism 10 are possible. The illustrated operating mechanism 10 corresponds in large measure with the operating mechanism according to Dutch patent application no. 1016489, whose contents are considered to be incorporated herein by reference.

The only thing that is mentioned about the front operating mechanism 10 herein is that an adjusting element, which is movable in longitudinal direction by means of an operating element which is actuated from the drive unit, is mounted under the front roof element 1, which adjusting element is capable of actuating the guiding device for the purpose of moving the guiding device into and out of engagement with the rear longitudinal guide. Preferably, the rear roof element 2 has at least substantially the same transverse dimension as the front roof element 1. In that case the adjusting element is preferably so constructed that the guiding device, or the sliding shoe thereon, is capable of making a lateral movement upon moving into and out of engagement with the rear longitudinal guide 16. This is not necessary, for example, when the guiding device of the front roof element 1 is disposed far outwards in lateral direction, in the wet part of frame 4. In this embodiment the guiding device can be a support which is fixedly or movably connected to the roof element 1, for example a fixed support fitted with a sliding shoe or a lever fitted with one or two sliding shoes.

In the illustrated embodiment, the rear longitudinal guide 16 has an entry and exit opening 17 on its front side, via which the sliding shoe 15 can enter and exit the rear longitudinal guide. Said opening 17 is positioned close to a front support, in this case a pivot 18, of the rear roof element 2, so that the opening 17 will hardly move, if at all, upon pivoting of the rear roof element. This enables the sliding shoe 15 to enter and exit the rear longitudinal guide 16 in every position of the rear roof element 2. It is also possible, of course, to keep the entry and exit opening 17 of the rear longitudinal guide 16 in position by means of a compensating device during pivoting movement of the rear roof element 2.

In this embodiment, rear operating mechanism 11 is in the form of a linkage mechanism comprising a lifting lever 19 and an auxiliary lever 20. At its upper end, lifting lever 19 is pivotally connected to the rear roof element 2, and at its lower it is pivotally connected to a pin 21 and slidably connected to a slot 22 of a driving slide 23. Auxiliary lever 20 is connected to frame 4 by means of a stationary hinge 24 at its lower end, and at its upper end it is connected to lifting lever 19, between the ends thereof, by means of a hinge 35. Rear operating mechanism 11 is fitted with a constraining guide, which comprises an actuating slot 26 formed in driving slide 23 and an actuating pin 27 formed on lifting lever 19. It is also possible to use other types of operating mechanisms, of course.

Driving slide 23 is movable by means of a driving element, such as a driving cable 28 of sufficient compressive and tensile strength, which can be operated either manually or electrically and which may have its own operating mechanism or which may be fixedly connected to or be capable of being connected to the operating mechanism of the front roof element 1.

Roof elements 1 and 2 can be moved in the desired manner by means of said operating mechanisms 10, 11. In principle, it is also possible to arrange the operating mechanisms in such a manner that the two roof elements are interlocked to form one unit in the rearmost position of the front roof element 1 (relative to the rear roof element 2) and in the uppermost position of the rear roof element 2, after which they are jointly moved further to the rear, for example to a position above the rear window of the vehicle, in particular the passenger car.

From the foregoing it will be apparent that the invention provides an open roof construction which provides a great many opening and ventilating possibilities, and which furthermore prevents undesirable booming effects. Furthermore it is possible to configure the roof elements 1, 2 as roof elements which extend flush with the fixed roof or roof elements of a different type, so that the vehicle roof is given an attractive appearance.

The invention is not restricted to the exemplary embodiment as described above and shown in the drawing, which can be varied in several ways without departing from the scope of the claims. Thus it is possible to fit the front roof element with a supporting or lifting device comprising an integrated guiding device, in such a manner that said supporting or lifting device can be moved to the rear into the rear longitudinal guide of the rear roof element. It is also possible not to move the front roof element to a ventilating position first and subsequently to the rear, but to move it only upwards to such an extent that rearward movement is directly possible. In that case a separate ventilating position can be created with a different operation of the lifting device, if desired. Furthermore it is possible to have the guiding device of the front element engage continuously with the rear longitudinal guide of the rear roof element. Instead of the movement to the ventilating position, or in addition thereto, the rear roof element could also make other movements, such as a forward or rearward movement.

## Claims

1. An open roof construction for a vehicle having an opening in its fixed roof (3), comprising a stationary part (4) to be attached to the vehicle roof and a front roof element (1) which is movably supported by said stationary part and which can be adjusted by means of a driving unit, as well as a rear roof element (2) which is positioned rearwards thereof, wherein said front roof element is movable between a closing position, in which the roof opening is closed, and an open, rearward position at least partially above the rear roof element, in which the roof opening in front of the rear roof element is at least partially released, wherein said stationary part is fitted with at least one front longitudinal guide extending along the roof opening, whereas a rear longitudinal guide (16) is mounted at the location of the rear roof element, wherein the front roof element is supported near its front side by a front support which is movably supported in said front longitudinal guide, and which is supported rearwards thereof by a supporting device (10) comprising a guiding device (14) for engagement in said rear longitudinal guide upon rearward movement of the front roof element, **characterized in that** the stationary part comprises a central beam (5) extending in transverse direction and separating a front opening (6) and a rear opening (7), said front roof element (1) being adapted to close the front opening (6), and said rear roof element (2) being capable of closing and at least partially releasing the rear opening (5), and **in that** said rear longitudinal guide (16) is mounted on the rear roof element (2), which is fitted with a rear operating mechanism (11) for moving the rear roof element to at least a ventilating position, in which it slopes upwards to the rear, wherein the rear operating mechanism can preferably be operated while the guiding device (14) of the front roof element (1) is positioned in said rear longitudinal guide.

2. An open roof construction according to claim 1, wherein said rear longitudinal guide (16) is present on both lateral edges of the rear roof element (2).

3. An open roof construction according to claim 2, wherein the rear roof element (2) comprises a panel, wherein the rear longitudinal guide (16) is positioned under said panel.

4. An open roof construction according to any one of the preceding claims, wherein said supporting device (10) is fitted with an operating mechanism, which supports the front roof element (1) at least in front positions thereof, whereas the guiding device (14) is movable in the rear longitudinal guide (16), supporting the front roof element in rearward positions thereof.

5. An open roof construction according to claim 4, wherein the guiding device (14) is out of engagement with the rear longitudinal guide (16) in the closed position of the front roof element (1), and wherein said guiding device (14) is brought into engagement with the rear longitudinal guide, via a front opening (17) thereof, upon adjustment by the front operating mechanism (10).

6. An open roof construction according to any one of the preceding claims, wherein the rear operating mechanism (11) and a front support (18) of the rear roof element (2) are so constructed that the front opening (17) of the rear longitudinal guide (16) remains at least substantially stationary upon pivoting of the rear roof element.

7. An open roof construction according to any one of the preceding claims, wherein the rear operating mechanism (11) is fitted with a linkage mechanism, which preferably comprises a lifting lever (19), which extends between a driving slide (23) and the rear roof element (2), and an auxiliary lever (20), which extends between said lifting lever and a longitudinal guide.

8. An open roof construction according to any one of the preceding claims, wherein the front longitudinal guide continues to the rear, at least as far as the rear height adjusting mechanism (11) of the rear roof element (2).

9. An open roof construction according to any one of the preceding claims, wherein an adjusting element, which is movable in longitudinal direction by means of an operating element which is actuated from the drive unit, is mounted under the front roof element (1), which adjusting element is fitted with said guiding device (14) and which is arranged for moving said guiding device into and out of engagement with the rear longitudinal guide.

10. An open roof construction according to any one of the preceding claims, wherein the rear roof element (2) has at least substantially the same transverse dimension as the front roof element (1).

11. An open roof construction according to claim 10, wherein the adjusting element is constructed such that the guiding device (14) is capable of making a lateral movement upon moving into and out of engagement with the rear longitudinal guide (16).

## Patentansprüche

1. Offendach-Konstruktion für ein Fahrzeug mit einer Öffnung in dessen Festdach (3), aufweisend ein stationäres Teil (4), welches an dem Fahrzeugdach anbringbar ist, und ein Front-Dachelement (1), welches von dem stationären Teil bewegbar gehalten ist und welches mittels einer Antriebseinheit verstellbar ist, sowie ein Heck-Dachelement (2), welches Rückwärts davon positioniert ist, wobei das Front-Dachelement zwischen einer Schließposition, in welcher die Dachöffnung geschlossen ist, und einer Offen-Ruckwärts-Position zumindest teilweise über das Heck-Dachelement bewegbar ist, in welcher die Dachöffnung an der Front des Heck-Dachelements zumindest teilweise feigegeben ist, wobei das stationäre Teil mit mindestens einer Front-Längsführung eingerichtet ist, welche sich entlang der Dachöffnung erstreckt, wobei eine Heck-Längsführung (16) an der Stelle des Heck-Dachelements montiert ist, wobei das Front-Dachelement nahe bei seiner Frontseite von einem in der Front-Längsführung bewegbar gehaltenen Frontträger gehalten ist und welche Rückwärts davon von einer Trage-Vorrichtung (10) gehalten ist, welche eine Führungs-Vorrichtung (14) zum Im-Eingriff-Stehen mit der Heck-Längsführung auf die Rückwärtsbewegung des Front-Dachelements aufweist, **dadurch gekennzeichnet, dass** das stationäre Teil einen Zentralträger (5) aufweist, welcher sich in Querrichtung erstreckt und eine Frontöffnung (6) und eine Hecköffnung (7) separiert, wobei das Front-Dachelement (1) zum Schließen der Frontöffnung (6) eingerichtet ist, und wobei das Heck-Dachelement (2) zum Schließen und zum mindestens teilweise Freigeben der Hecköffnung (5) geeignet ist, und dass die Heck-Längsführung (16) an dem Heck-Dachelement (2) montiert ist, welches mit einem Heck-Betätigungsmechanismus (11) zum Bewegen des Heck-Dachelements in wenigstens eine Entlüftungsposition eingerichtet ist, in welcher es aufwärts nach hinten geneigt ist, wobei der Heck-Betätigungsmechanismus vorzugsweise betätigtbar ist während die Führungs-Vorrichtung (14) des Front-Dachelements (1) in der Heck-Längsführung positioniert ist.

2. Offendach-Konstruktion gemäß Anspruch 1, wobei die Heck-Längsführung (16) auf beiden seitlichen Rändern des Heck-Dachelements (2) vorhanden ist.

3. Offendach-Konstruktion gemäß Anspruch 2, wobei das Heck-Dachelement (2) ein Paneel aufweist, wobei die Heck-Längsführung (16) unter dem Paneel positioniert ist.

4. Offendach-Konstruktion gemäß einem der vorhergehenden Ansprüche, wobei die Trage-Vorrichtung (10) mit einem Betätigungsmechanismus eingerichtet ist, welcher das Front-Dachelement (1) wenigstens in dessen Front-Positionen trägt, wobei die Führungs-Vorrichtung (14) in der Heck-Längsführung (16) bewegbar ist, welche das Front-Dachelement in dessen Rückwärts-Positionen trägt.

5. Offendach-Konstruktion gemäß Anspruch 4, wobei die Führungs-Vorrichtung (14) in der Schließ-Position des Front-Dachelements (1) aus dem Eingriff mit der Heck-Längsführung (16) steht, und wobei die Führungs-Vorrichtung (14) in Eingriff mit der Heck-Längsführung über eine Frontöffnung (17) davon auf das Einstellen von dem Front-Betätigungsmechanismus (10) gebracht ist.

6. Offendach-Konstruktion gemäß einem der vorhergehenden Ansprüche, wobei der Heck-Betätigungsmechanismus (11) und ein Frontträger (18) des Heck-Dachelements (2) so konstruiert sind, dass die Frontöffnung (17) der Heck-Längsführung (16) zumindest im Wesentlichen stationär auf das Schwenken des Heck-Dachelements bleibt.

7. Offendach-Konstruktion gemäß einem der vorhergehenden Ansprüche, wobei der Heck-Betätigungsmechanismus (11) mit einem Gestänge-Mechanismus eingerichtet ist, welcher vorzugsweise einen sich zwischen einem Antriebs-Läufer (23) und dem Heck-Dachelement (2) erstreckenden Hebe-Hebel (19) und einen sich zwischen dem Hebe-Hebel und einer Längsführung erstreckenden Hilfs-Hebel (20) aufweist.

8. Offendach-Konstruktion gemäß einem der vorhergehenden Ansprüche, wobei die Front-Längsführung sich auf der Heckseite wenigstens bis zur hinteren Höhe des EinstellMechanismus (11) des Heck-Dachelements (2) fortsetzt.

9. Offendach-Konstruktion gemäß einem der vorhergehenden Ansprüche, wobei ein Einstell-Element, welches in Längsrichtung mittels eines Betätigungs-Elements bewegbar ist, welches von der Antriebseinheit betätigt wird, unter dem Front-Dachelement (1) montiert ist, welches Einstell-Element mit der Führungs-Vorrichtung (14) eingerichtet ist und welches zum Bewegen der Führungs-Vorrichtung in den und aus dem Eingriff mit der hinteren Längsführung bringbar eingerichtet ist.

10. Offendach-Konstruktion gemäß einem der vorhergehenden Ansprüche, wobei das Heck-Dachelement (2) wenigstens die gleichen Querabmessungen wie das Front-Dachelement (1) aufweist.

11. Offendach-Konstruktion gemäß Anspruch 10, wobei das Einstell-Element derart konstruiert ist, dass die Führungs-Vorrichtung (14) zum Durchführen einer seitlichen Bewegung auf eine Bewegung in und aus dem Eingriffbringen mit der Heck-Längsführung (16) im Stande ist.

## Revendications

1. Construction de toit ouvrant pour un véhicule ayant une ouverture dans son toit fixe (3), comprenant une partie stationnaire (4) à fixer sur le toit du véhicule et un élément de toit avant (1) qui est supporté de façon mobile par ladite partie stationnaire et qui peut être ajusté au moyen d'une unité d'entraînement, ainsi qu'un élément de toit arrière (2) qui est positionné vers l'arrière de celui-ci, dans lequel ledit élément de toit avant est mobile entre une position de fermeture, dans laquelle l'ouverture de toit est fermée, et une position arrière ouvrante au moins partiellement au-dessus de l'élément de toit arrière, dans laquelle l'ouverture de toit à l'avant de l'élément de toit arrière est au moins partiellement libérée, dans lequel ladite partie stationnaire est équipée d'au moins un guidage longitudinal frontal s'étendant le long de l'ouverture de toit ouvrant, tandis qu'un guidage longitudinal arrière (16) est monté à l'emplacement de l'élément de toit arrière, dans laquelle l'élément de toit avant est supporté à proximité de son côté avant par un support frontal qui est supporté de façon mobile dans ledit guidage longitudinal avant, et qui est supporté vers l'arrière de celui-ci par un dispositif de support (10) comprenant un dispositif de guidage (14) pour l'engagement dans ledit guidage longitudinal arrière lors du mouvement vers l'arrière de l'élément de toit avant, **caractérisée en ce que** la partie stationnaire comprend une poutre centrale (5) s'étendant dans la direction transversale et séparant une ouverture avant (6) et une ouverture arrière (7), ledit élément de toit avant (1) étant apte à fermer l'ouverture avant (6), et ledit élément de toit arrière (2) étant capable de se fermer et de libérer au moins partiellement l'ouverture arrière (5), et **en ce que** ledit guidage longitudinal arrière (16) est monté sur l'élément de toit arrière (2) qui est équipé d'un mécanisme opérant arrière (11) pour déplacer l'élément de toit arrière sur au moins une position de ventilation, dans laquelle il s'incline vers le haut en direction de l'arrière, dans laquelle le mécanisme opérant arrière peut de préférence être actionné, tandis que le dispositif de guidage (14) de l'élément de toit avant (1) est positionné dans ledit guidage longitudinal arrière.

2. Construction de toit ouvrant selon la revendication 1, dans laquelle ledit guidage longitudinal arrière (16) est présent sur les deux bords latéraux de l'élément de toit arrière (2).

3. Construction de toit ouvrant selon la revendication 2, dans laquelle l'élément de toit arrière (2) comprend un panneau, dans lequel le guidage longitudinal arrière (16) est positionné sous ledit panneau.

4. Construction de toit ouvrant selon l'une quelconque des revendications précédentes, dans laquelle ledit dispositif de support (10) est équipé d'un mécanisme opérant, lequel supporte l'élément de toit avant (1) au moins dans ses positions avant, tandis que le dispositif de guidage (14) est mobile dans le guidage longitudinal arrière (16), supportant l'élément de toit avant dans ses positions vers l'arrière.

5. Construction de toit ouvrant selon la revendication 4, dans laquelle le dispositif de guidage (14) est désengagé du guidage longitudinal arrière (16) dans la position fermée de l'élément de toit avant (1), et dans laquelle ledit dispositif de guidage (14) est amené en engagement avec le guidage longitudinal arrière, par le biais de son ouverture frontale (17), lors de l'ajustement du mécanisme opérant avant (10).

6. Construction de toit ouvrant selon l'une quelconque des revendications précédentes, dans laquelle le mécanisme opérant arrière (11) et un support avant (18) de l'élément de toit arrière (2) sont construits de telle sorte que l'ouverture avant (17) du guidage longitudinal arrière (16) demeure au moins sensiblement stationnaire lors du pivotement de l'élément de toit arrière.

7. Construction de toit ouvrant selon l'une quelconque des revendications précédentes, dans laquelle le mécanisme opérant arrière (11) est équipé d'un mécanisme à articulation qui, de préférence, comprend un levier de soulèvement (19) qui s'étend entre une glissière d'entraînement (23) et l'élément de toit arrière (2), et un levier auxiliaire (20) qui s'étend entre ledit levier de soulèvement et un guidage longitudinal.

8. Construction de toit ouvrant selon l'une quelconque des revendications précédentes, dans laquelle le guidage longitudinal frontal continue vers l'arrière, au moins jusqu'au mécanisme d'ajustement de hauteur arrière (11) de l'élément de toit arrière (2).

9. Construction de toit ouvrant selon l'une quelconque des revendications précédentes, dans laquelle un élément d'ajustage, qui est mobile dans la direction longitudinale au moyen d'un élément opérant qui est actionné par l'unité d'entraînement, est monté sous l'élément de toit avant (1), lequel élément d'ajustement est équipé dudit dispositif de guidage (14) et est agencé pour déplacer ledit dispositif de guidage en engagement et hors engagement avec le guidage longitudinal arrière.

10. Construction de toit ouvrant selon l'une quelconque des revendications précédentes, dans laquelle l'élément de toit arrière (2) présente au moins sensiblement la même dimension transversale que l'élément de toit avant (1).

11. Construction de toit ouvrant selon la revendication 10, dans laquelle l'élément d'ajustement est construit de telle sorte que le dispositif de guidage (14) est capable d'effectuer un mouvement latéral lors du déplacement en engagement et hors engagement avec le guidage longitudinal arrière (16).
